# EUROPÄISCHE PATENTSCHRIFT

(11) **EP 0 537 107 B1**
(45) Veröffentlichungstag und Bekanntmachung des Hinweises auf die Patenterteilung: **03.01.1996**
(21) Anmeldenummer: 92810634.3
(22) Anmeldetag: 19.08.1992
(51) Int. Cl.: B23F 19/05, B23F 23/12

(54) **Maschine zur Zahnradfeinbearbeitung und Verfahren zum Abrichten eines abrasiven Werkzeuges**
Machine for finishing gears and method for dressing an abrasive tool
Machine pour le finissage de roues dentées et procédé pour le dressage d'un outil abrasif

(30) Priorität: 28.08.1991 CH 2519/91
(43) Veröffentlichungstag der Anmeldung: 14.04.1993
(73) Patentinhaber: REISHAUER AG., CH-8304 Wallisellen (CH)
(72) Erfinder: Feisel, Armin, CH-8200 Schaffhausen (CH)
(74) Vertreter: Münch, Otto

(56) Entgegenhaltungen:
- DE-B- 1 296 486
- GB-A- 864 688
- GB-A- 2 018 178
- GB-A- 2 151 520
- US-A- 2 165 386
- US-A- 2 685 234

## Beschreibung

Es sind Maschinen zur Feinbearbeitung der Zahnflanken von Zahnrädern bekannt, bei denen ein aus Schleifmittel in einer geeigneten Bindungsmatrix bestehendes Werkzeugzahnrad, welches innen- oder aussenverzahnt sein kann, im Eingriff mit dem Werkstückzahnrad steht und durch Antrieb eines der beiden Räder bei gleichzeitigem Zustellen in Achsabstandsrichtung ein Abtrag auf den Flanken des Werkstückzahnrades erfolgt. Das Werkzeugzahnrad wird vorgängig mit einem geeigneten Werkzeug, z.B. einem diamantbeschichteten Abrichtzahnrad abgerichtet. Ueblicherweise sind die Achsen von Werkzeug- und Werkstückzahnrad nicht parallel, sondern gekreuzt, so dass auch im Wälzkreis infolge der Axialkomponente noch eine Relativbewegung und damit Materialabtrag erfolgt. Das Nachprofilieren bei stumpfem Werkzeugzahnrad oder Verlust der Profiltreue erfolgt durch eine radiale Zustellbewegung des Abrichtzahnrades.

Durch das Abrichten verändert sich der Durchmesser des Werkzeugzahnrades, und zwar wird dabei ein aussenverzahntes Rad kleiner und ein innenverzahntes grösser. Diese Durchmesserveränderung ist gleichbedeutend mit einer Profilverschiebung des Werkzeugzahnrades. Da aber aufgrund verzahnungsgeometrischer Gesetze nur in einem begrenzten, hauptsächlich von Zähnezahl und Eingriffswinkel abhängigen Bereich eine Profilverschiebung mit ungestörtem Zahneingriff möglich ist, kann das Werkzeugzahnrad auch nur in einem eng begrenzten Durchmesserbereich ausgenutzt werden.

Ein weiterer Nachteil dieses Feinbearbeitungsverfahrens entsteht durch die Verschiebung des Wälzpunktes auf dem Werkstückzahnrad infolge der fortlaufenden abrichtbedingten Profilverschiebung des Werkzeugzahnrades. Damit ändern sich die Relativgeschwindigkeiten zwischen Werkstückzahnrad und Werkzeugzahnrad und somit die Abtragsverhältnisse und insbesondere die Bearbeitungsspuren auf der Zahnflanke, womit eine gleichbleibend konstante Fertigung in Frage gestellt oder zumindest erschwert wird.

Ziel der vorliegenden Erfindung ist die Beseitigung der vorgängig geschilderten Nachteile. Diese Aufgabe wird durch die Merkmalskombination des Anspruchs 1 gelöst.

Aus der US-PS 2 165 386 sind Maschinen zum Läppen von Stirnzahnrädern bekannt. In einer Ausführungsform ist das Werkstück-Zahnrad auf einer Werkstückspindel frei drehbar gelagert. Zwei zahnradartige Läpp-Werkzeuge sind auf je einer Werkzeugachse gelagert und kämmen mit dem Zahnrad. Die eine der beiden Werkzeugspindeln ist angetrieben, die andere gebremst, sodass die beiden Werkzeuge gleichzeitig die gegenüberliegenden Zahnflanken des Zahnrades bearbeiten. Um ein gleichmässig Schliffbild über die Länge der Zahnflanken zu erhalten, wird im Betrieb das Werkstück längs seiner Achse oszilliert.

In einer andern Ausführungsform ist nur ein einziges Werkzeug mit einer konischen Innenverzahnung vorgesehen, das gleichzeitig mit zwei Werkstück-Zahnrädern kämmt.

Nachfolgend wird ein Ausführungsbeispiel der Erfindung anhand der Zeichnungen erläutert. Darin zeigt:
- Fig. 1: schematisch die relative Lage zwischen Werkzeug und Werkstück, und
- Fig. 2: ein schematisches Ausführungsbeispiel einer Maschine.

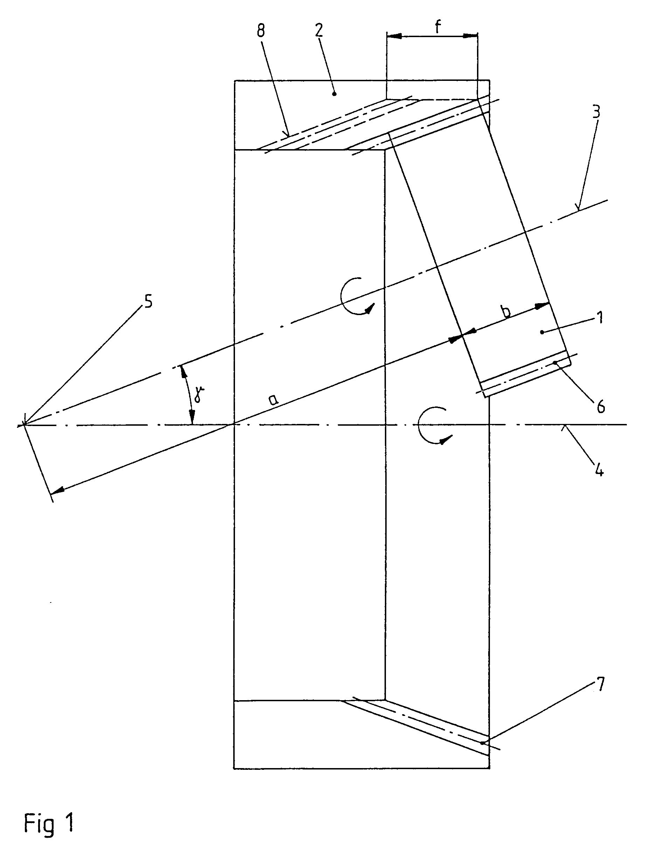

Fig. 1 zeigt schematisch die relative Lage des Werkstückes 1 zum Werkzeug 2, welches hier als innenverzahntes Zahnrad ausgebildet ist. Die Achse 3 des Werkstücks 1 schliesst mit der Achse 4 des Werkzeugs 2 den Achskreuzungswinkel γ ein. Der Achskreuzungswinkel γ ist grösser als 0°, aber höchstens 90°. Der Abstand a des Werkstücks 1 vom Achsenschnittpunkt 5 (beziehungsweise von der gemeinsamen Normalen von Werkstückachse 3 und Werkzeugachse 4) ist grösser als die Breite b der Zähne 6 des Werkstücks 1. Damit steht die Werkstückverzahnung 6 im Eingriff mit der konischen Verzahnungspartie 7 des Werkzeugzahnrades 2.

Die Zustellbewegung erfolgt nun nicht mehr wie bei den bisher bekannten Verfahren senkrecht zur Werkstückachse 3, sondern parallel zur Werkzeugachse 4. Auch die beim Abrichten oder Nachprofilieren mit einem diamantbeschichteten Zahnrad nötige Zustellbewegung erfolgt parallel zur Werkzeugachse 4. Auf diese Weise verschiebt sich die Werkzeugverzahnung 7 durch wiederholtes Abrichten nach links, z.B. in die gestrichelt dargestellte Position 8. Der kumulierte Abricht- bzw. Zustellbetrag ist mit f bezeichnet. Da sich der Schnittpunkt von Werkstückachse 3 und Werkzeugachse 4 um den gleichen Betrag f nach links verschoben hat, verändert sich die Verzahnungsgeometrie des Werkzeugs 2 im Eingriff mit dem Werkstück 1 dabei nicht, und Profilverschiebungen werden vollständig vermieden. Damit ist eine konstante Fertigung gewährleistet. Der maximal mögliche Abrichtbetrag ist also nicht mehr durch die Verzahnungsgeometrie eingeschränkt, sondern hängt nur noch von der Breite des Werkzeugs 2 ab, die aber in weiten Grenzen frei wählbar ist.

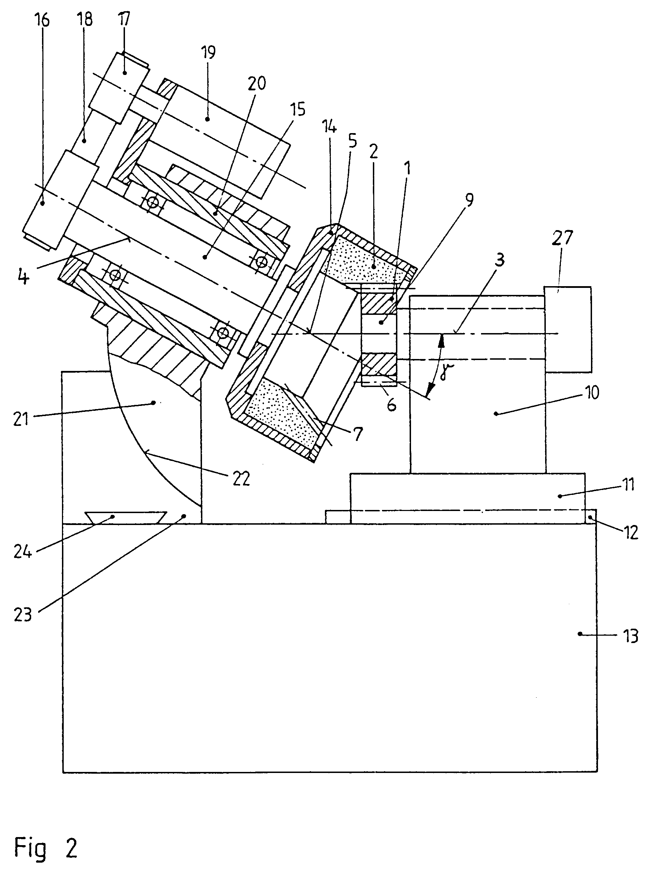

Fig. 2 zeigt schematisch ein Ausführungsbeispiel einer Maschine, in welcher die zur Erzielung der relativen Lage und Bewegungen von Werkzeug 2 und Werkstück 1 nach Fig. 1 notwendigen Maschinenbaugruppen dargestellt sind.

Das Werkstückzahnrad 1 wird von einer Spindel 9 aufgenommen, die mit nicht dargestellten Lagern in einem Gehäuse 10 drehbar gelagert ist. Das Gehäuse 10 ist auf einem Schlitten 11 befestigt, welcher seinerseits auf Führungen 12 gegenüber dem Maschinenbett 13 parallel zur Werkstückachse 3 verschoben werden kann. Das Werkzeug 2 ist über eine Aufnahme 14 mit der Werkzeugspindel 15 verbunden, welche über Riemenscheiben 16 und 17 und einen Riemen 18 von einem Motor 19 angetrieben wird. Die Spindel 15 ist in einer Pinole 20 drehbar gelagert.

Die Pinole 20 kann durch nicht dargestellte Mittel in Richtung der Achse 4 in einem Schwenkgehäuse 21 verstellt werden, z.B. mittels eines Hydraulikzylinders. Das Schwenkgehäuse 21 kann in einer kreisbogenförmigen Führung 22 um den Achsenschnittpunkt 5 verstellt werden, wodurch der Achskreuzungswinkel γ verändert werden kann.

Der das Schwenkgehäuse 21 über die Führung 22 aufnehmende Schlitten 23 kann auf einer Querführung 24 parallel zur Richtung der gemeinsamen Normalen von Werkstückachse 3 und Werkzeugachse 4 verschoben werden, wodurch im Zahneingriff zwischen Werkzeug 2 und Werkstück 1 die eingangs erwähnte Axialkomponente der Relativbewegung im Wälzkreis entsteht.

Die Bearbeitung erfolgt entweder mit Zweiflankenberührung zwischen Werkstück 1 und Werkzeug 2. In diesem Fall ist die Werkstückspindel 9 frei drehbar. Es kann jedoch auch mit Einflankenberührung bearbeitet werden. Dazu ist die Spindel 9 mit einer einstellbaren Bremse 27 verbunden. Motor 19 und Bremse 27 können auch vertauscht werden, so dass die Werkstückspindel 9 angetrieben und die Werkzeugspindel 15 entweder gebremst oder frei drehbar ist. Bei der Einflankenberührung ist der Motor 19 in beiden Drehrichtungen antreibbar.

Zum Abrichten des Werkzeugzahnrades 2 wird anstelle des Werkstückzahnrades 1 ein mit Diamant oder kubischem Bornitrid beschichtetes Abrichtzahnrad auf der Spindel 9 aufgespannt. Das Abrichtzahnrad hat die gleiche Verzahnungsgeometrie wie das zu schleifende Zahnrad 1, ist aber zweckmässig etwas breiter. Die Abricht-Zustellung erfolgt wiederum in Richtung der Werkzeugachse 4.

## Patentansprüche

1. Maschine zum Feinbearbeiten der Zahnflanken eines zylindrischen Stirnzahnrades (1), umfassend eine um eine Werkstückachse (3) drehbar gelagerte Werkstückspindel (9) zum Einspannen eines Stirnzahnrades (1) und eine um eine Werkzeugachse (4) drehbar gelagerte Werkzeugspindel (15), in welcher ein verzahntes Werkzeug (2) eingespannt ist, wobei die Verzahnung (7) des Werkzeuges (2) auf einer kegelähnlichen Fläche ausgebildet ist, und wobei die Werkzeugspindel (15) zur Bearbeitung des Zahnrades (1) und/oder zum Abrichten des Werkzeuges (2) in Richtung der Werkzeugachse (4) relativ zur Werkstückspindel (9) zustellbar ist.

2. Maschine nach Anspruch 1, dadurch gekennzeichnet, dass die Verzahnung (7) des Werkzeuges (2) derart ausgebildet ist, dass sie im Betrieb am Stirnzahnrad (1) über dessen ganze Breite (b) anliegt.

3. Maschine nach Anspruch 1 oder 2, dadurch gekennzeichnet, dass der Winkel (γ) zwischen den beiden Achsen (3,4) einstellbar ist.

4. Maschine nach einem der Ansprüche 1 bis 3, wobei sich die beiden Achsen (3,4) windschief kreuzen, dadurch gekennzeichnet, dass der Abstand zwischen den beiden Achsen (3,4) einstellbar ist.

5. Maschine nach einem der Ansprüche 1 bis 4, dadurch gekennzeichnet, dass die gemeinsame Normale (5) der beiden Achsen (3,4) seitlich ausserhalb der Werkzeugverzahnung (7) verläuft.

6. Maschine nach einem der Ansprüche 1 bis 5, dadurch gekennzeichnet, dass die Werkstückspindel (9) längs ihrer Achse (3) relativ zur Werkzeugspindel (15) verschiebbar ist.

7. Maschine nach einem der Ansprüche 1 bis 6, dadurch gekennzeichnet, dass die Verzahnung (7) des Werkzeugs (2) eine Innenverzahnung ist.

8. Maschine nach einem der Ansprüche 1 bis 7, dadurch gekennzeichnet, dass das Werkzeug (2) ein Schleif- oder Honzahnrad mit in einer Matrix eingebundenen Hartstoffkörnern ist.

9. Maschine nach einem der Ansprüche 1 bis 8, dadurch gekennzeichnet, dass die eine (9) der beiden Spindeln (9,15) mit einer Bremse (27) und die andere Spindel (15) mit einem in beiden Drehrichtungen antreibbaren Motor (19) verbunden ist.

10. Verfahren zum Abrichten eines Schleif- oder Honzahnrades (2) unter Verwendung einer Maschine gemäss einem der Ansprüche 1 bis 9, wobei ein bezüglich der Flankenform dem mit dem Schleif- bzw, Honzahnrad (2) zu schleifenden Werkstückzahnrad (1) formtreu entsprechendes, mit Körnern aus Diamant oder kubischem Bornitrid beschichtetes Abrichtzahnrad auf der Werkstückspindel (9) eingespannt wird und das Schleif- bzw. Honzahnrad (2) längs der Schleifspindelachse (4) relativ zur Werkstückspindel (9) zugestellt wird.

## Claims

1. An apparatus for fine machining tooth flanks of a cylindrical spur gear, comprising a workpiece spindle (9) rotatable around a workpiece axis (3) for clamping a spur gear workpiece (1), and a tool spindle (15) rotatable around a tool axis (4) for clamping a toothed spur gear grinding tool (2) wherein teeth (7) of the tool are defined on a conical surface, and wherein the tool spindle (15) is fed relative to the workpiece spindle (9) in the direction of the tool axis (4) to machine the spur gear (9) and/or to dress the tool (2).

2. An apparatus as claimed in claim 1, wherein the teeth (7) of the tool (2) are configured with a sufficient width such that they engage along the entire width (b) of the spur gear workpiece (1) during machining.

3. An apparatus as claimed in claim 1 or 2, wherein the angle γ between the two axes (3, 4) is adjustable.

4. An apparatus as claimed in one of claims 1-3, wherein the two axes (3, 4) are skewed, the distance between the two axes (3, 4) being adjustable.

5. An apparatus as claimed in one of claims 1-4, wherein a common line (5) perpendicular to the two axes (3, 4) extends laterally outside the tool teeth (7).

6. An apparatus as claimed in one of claims 1-5, wherein the workpiece spindle (9) can be moved relative to the tool spindle (15) along the workpiece axis (3).

7. An apparatus as claimed in one of claims 1-6, wherein the tool (2) has internal teeth (7).

8. An apparatus as claimed in one of claims 1-7, wherein the tool (2) is a grinding or honing gear with hard material grains bonded into a matrix.

9. An apparatus as claimed in one of claims 1-8, wherein one (9) of the two spindles (9, 15) is connected to a brake (27), and the other spindle (15) is connected to a bi-directional drive motor (19).

10. A method of dressing a toothed grinded tool (2) using an apparatus according to one of claims 1-9, wherein a dressing spur gear corresponding in the form of the flanks to the workpiece gear (1) to be ground and being coated with grains of diamond or cubic boron nitride is mounted on the workpiece spindle (9) and the honing or grinding tool (2) is infed along the tool axis (4) relative to the workpiece spindle (9).

## Revendications

1. Machine pour la taille de finition des flancs des dents d'une roue dentée cylindrique (1), comportant une broche (9) porte-pièce à tailler, portée avec liberté de rotation autour d'un axe (3) de la pièce, pour brider une roue dentée (1) et une broche (15) porte-outil qui est portée avec liberté de rotation autour d'un axe (4) de l'outil et dans laquelle est bridé un outil denté (2), machine dans le cas de laquelle la denture (7) de l'outil (2) est formée sur une surface conique et dans le cas de laquelle la broche porte-outil (15) peut, pour le taillage de la roue dentée (1) et/ou le dressage de l'outil (2), se déplacer selon la direction de l'axe (4) de l'outil par rapport à la broche (9) porte-pièce.

2. Machine selon la revendication 1, caractérisée par le fait que la denture (7) de l'outil (2) est conçue de façon qu'en service elle s'appuie contre la roue dentée (1) sur toute la largeur (b) de cette roue.

3. Machine selon la revendication 1 ou 2, caractérisée par le fait que l'angle γ entre les deux axes (3, 4) est réglable.

4. Machine selon l'une des revendications 1 à 3, dans le cas de laquelle les deux axes (3, 4) se croisent sans s'intersecter, caractérisée par le fait que la distance entre les deux axes (3, 4) est réglable.

5. Machine selon l'une des revendications 1 à 4, caractérisée par le fait que la normale commune (5) des deux axes (3, 4) passe sur le côté, en dehors de la denture (7) de l'outil.

6. Machine selon l'une des revendications 1 à 5, caractérisée par le fait que la broche porte-pièce (9) peut coulisser le long de son axe (3) par rapport à la broche porte-outil (15).

7. Machine selon l'une des revendications 1 à 6, caractérisée par le fait que la denture (7) de l'outil (2) est une denture intérieure.

8. Machine selon l'une des revendications 1 à 7, caractérisée par le fait que l'outil (2) est une roue dentée de rectification ou de rodage avec des grains de matériau de dureté élevée enrobés dans une matrice.

9. Machine selon l'une des revendications 1 à 8, caractérisée par le fait que la première (9) des deux broches (9, 15) est reliée à un frein (27) et que l'autre broche (15) l'est à un moteur (19) qui peut être entraîné dans les deux sens de rotation.

10. Procédé de dressage d'une roue dentée de rectification ou de rodage (2) avec emploi d'une machine conforme à l'une des revendications 1 à 9, dans le cas duquel on bride sur la broche porte-pièce (9) une roue dentée de dressage qui correspond, en ce qui concerne la forme des flancs, avec précision de forme, à la roue dentée (1) constituant la pièce à rectifier avec la roue dentée de rectification ou de rodage (2), et qui est revêtue de grains de diamant ou de nitrure de bore cubique et dans le cas duquel on règle la position de la roue dentée de rectification ou de rodage (2) le long de l'axe (4) de la broche de rectification par rapport à la broche porte-pièce (9).
